# EUROPÄISCHE PATENTSCHRIFT

(11) **EP 1 898 025 B1**
(45) Veröffentlichungstag und Bekanntmachung des Hinweises auf die Patenterteilung: **12.12.2012**
(21) Anmeldenummer: 07016545.1
(22) Anmeldetag: 23.08.2007
(51) Int. Cl.: E04F 15/02, E04F 15/20, B32B 3/26, B32B 3/30, B32B 7/10

(54) **Paneel mit Trittschall- und mit Raumschall-Dämmung, Belag aus Paneelen, schallmindernde Beschichtung, Verfahren zu dessen Herstellung und Vorrichtung hierzu**
Panel with impact noise and ambient noise insulation, covering consisting of panels, noise reducing coating, method for its manufacture and device therefor
Panneau doté d'une isolation sonore contre le bruit de pas et le bruit ambiant, revêtement constitué de panneaux, couche de revêtement réduisant le bruit, son procédé de fabrication et dispositif associé

(30) Priorität: 28.08.2006 DE 102006040084; 21.12.2006 DE 102006061852
(43) Veröffentlichungstag der Anmeldung: 12.03.2008
(73) Patentinhaber: Kronotec AG, 6006 Luzern (CH)
(72) Erfinder:
(74) Vertreter: Kalkoff & Partner

(56) Entgegenhaltungen:
- EP-A1- 1 219 760
- WO-A1-03/074817
- WO-A1-2005/018833
- DE-A1-102004 056 540
- DE-A1-102005 031 187
- DE-C1- 10 034 407
- DE-U1- 20 200 235
- US-A- 4 803 112

## Beschreibung

Die Erfindung betrifft ein Paneel mit einer Trittschall-Dämmung und mit einer Raumschall-Dämmung. Trittschall strahlt von der in Schwingung versetzten Oberfläche in benachbarte, insbesondere in hinter bzw. unter der Oberfläche liegende Räume ab. Raumschall strahlt von der in Schwingung versetzten Oberfläche in den Raum ab, der durch diese Oberfläche begrenzt wird. Trittschall- und Raumschall treten bei sämtlichen Oberflächen auf, die in Schwingung versetzt werden. Besonders störend wirken sie sich bei harten oder dichten Oberflächen aus. Die Erfindung bezieht sich daher auf Paneele, die aus beliebigem Werkstoff gefertigt sein können. Insbesondere sind aber Paneele aus Holz oder Holzwerkstoff berücksichtigt, vor allem Paneele aus hochdichter Faserplatte (HDF) oder mitteldichter Faserplatte (MDF). Typischer Anwendungsfall sind schwimmend verlegte Böden.

Sowohl Trittschall als auch Raumschall werden meist als unangenehm empfunden und sollen daher so weit wie möglich gedämmt werden. Langjährig bekannt ist es, dass Paneele, die mit dem Untergrund verklebt werden, weniger Raumschall verursachen als schwimmend verlegte Paneele. Da die schwimmende Verlegung jedoch insbesondere beim nachträgliche Einbau von Paneelen große Vorteile bietet, wurden auch Ansätze zur Raumschall-Dämmung von schwimmend verlegten Paneelen entwickelt. Hierzu werden derzeit entweder separate Lagen von geschlossen-porigen oder offenporigen, leichten Werkstoffen (Kork, Polyurethanschaum-Platten, PE-Schaum, PP-Schaum, Gummimatten, Fasermatten, Vliese, andere elastische Matten) unter den Paneelen verlegt. Alternativ werden Paneele unmittelbar mit einer Trittschall-Dämmnung versehen, die auf der dem Raum abgewandten Seite des Paneels angeordnet ist. Derartige Paneele mit einer Trittschall-Dämmung sind z. B. aus der DE 202 00 235 U1 bekannt. Dort ist ein Paneel beschrieben, das auf der Unterseite mit einer Kunststoff-Beschichtung versehen ist, die eine nicht-ebene, von dem Paneel weg weisende Außenseite aufweist. Mit einer Trittschall-Dämmung beschichtete Paneele sind verlegefreundlich, weil das Handhaben eines zusätzlichen Materials entfällt.

Auch ist aus der DE 10 2005 031 187 ist ein Paneel bekannt, auf dessen Unterseite eine schallisolierende Matte (Dämmschicht) aufgeklebt ist. Diese schallisolierende Matte kann auf ihren beiden Oberflächen mit Vorsprüngen ("Zarken") versehen sein.

Weitere Ansätze zur Schalldämmung sind aus dem Stand der Technik bspw. durch Aufbringen zusätzliche Schichten aus Schmelzkleber bekannt. So offenbart die DE 10 2004 056 540 ein Paneel mit einem Gegenzug, der mit einer aus Schmelzkleber bestehenden Schalldämmshicht überzogen ist. Die DE 202 00 235 41 offenbart ebenfalls eine plan auf den Gegenzug eines Paneels profilierte Schmelzkleberschicht. Die DE 100 34 407 beschreibt ein Paneel, bei dem Klebstoffstreifen auf den Gegenzug aufgetragen sind, wodurch sich Luftpolster zwischen den Klebstoffstreifen ausbilden. Ein Ähnlichen Ansatz verfolgt die WO 03/0748 bei der auf eine Unterseite eines Paneels vollflächig oder netzartig Schmelzkleber als Dämmschicht aufgetragen wird.

Die EP 1 219 760 offenbart ein Paneel, bei dem auf der Unterseite plan aufeinander eine schwere Dämpfungsschicht zusätzlich von einer leichtenschalldämrnschicht überdeckt ist. Die US 4,803,112 offenbart ebenfalls die Kombination von schweren und leichten Materialien. Sie beschreibt eine Anordnung zum Dämpfen von Fußböden, die aus einer Luftpolster-Folie besteht und bei der der Raum zwischen den Lufttaschen mit vernetzter, viskoelastischer Masse (z.B. Latex) ausgefüllt ist.

Zur Beeinflussung des Raumschalls sind ebenfalls Beschichtungen von Paneelen bekannt. Beispielsweise wird angestrebt, durch Erzeugen einer besonders weichen, dem Raum zugewandten Oberfläche den Raumschall beeinflussen oder verringern zu können. Eine derartige Beschichtung ist in der DE 103 38 854 und der WO 2005/018833 beschrieben.

Die bekannten Maßnahmen zur Dämmung von Tritt- und Raumschall sind jedoch aufwändig, weil unterschiedliche Oberflächen des Paneels bearbeitet werden müssen. Die beschriebenen Maßnahmen zur Raumschall-Dämmung können zudem nicht bei jedem Paneel umgesetzt werden. Wenn das Paneel eine beschichtete und/oder dekorativ gestaltete Oberfläche aufweist, dann ist es aus technischen Gründen oft nicht möglich eine Raumschall-Dämmung in diesen Oberflächenaufbau einzubeziehen.

Es ist daher Aufgabe der Erfindung, ausgehend vom Stand der Technik ein Paneel und einen Belag mit einer einfach aufzubringenden und vielfach einsetzbaren Trittschall-Dämmung und Raumschall-Dämmung, eine schallmindernde Beschichtung sowie ein Verfahren und eine Vorrichtung zu dessen Herstellung vorzuschlagen, bei der besonders wirkungsvoll Schallenergie abgebaut wird.

Diese Aufgabe wird gelöst mit einem Paneel mit einer in der Gebrauchslage dem Raum zugewandten Oberseite und einer dem Boden zugewandten Unterseite, wobei die Unterseite mindestens abschnittsweise eine Verbindungsschicht mit einer Dichte von mehr als 600 kg/m³ aufweist, und die Verbindungsschicht auf der dem Paneel abgewandten Seite eine nicht-ebene Oberfläche aufweist, und die nicht-ebene Oberfläche der Verbindungsschicht zur Erzeugung von Vorsprüngen profiliert ist, dadurch gekennzeichnet, dass die Verbindungsschicht mit einer Dämpfungsschicht aus weichem Kunststoff beschichtet ist, wobei die Dämpfungsschicht die Verbindungsschicht vollständig abdeckt, und wobei die Vorsprünge in die Dämpfungsschicht aus weichem Kunststoff eingebettet sind.

Die nicht-ebene Oberfläche auf der Unterseite des Paneels wird durch Profilieren erzeugt. Mit dem Begriff "Profilieren" wird jede regelmäßige oder unregelmäßige Strukturierung der Unterseite des Paneels umfasst, sei es das unmittelbare Prägen oder Fräsen der Unterseite des Paneels oder das Aufbringen von strukturierten Schichten z. B. durch Aufkleben von kunstharz-getränkten Papieren, die eine für die Schalldämmung erforderliche Struktur aufweisen.

Es hat sich herausgestellt, dass die Vergrößerung der schalldämpfenden Oberfläche, die mit der Profilierung einhergeht, sich nicht nur positiv auf die Trittschall-Dämmung auswirkt, indem beispielsweise die Vertikalauslenkung des Paneels, z. B. durch einen Schritt, der auf die Oberseite des Paneels trifft, in eine Horizontalbewegung der Verbindungsschicht umgewandelt wird, weil die durch die Profilierung entstehenden Vorsprünge der Verbindungsschicht senkrecht zu dem plattenförmigen Paneel stehen. Diese Gestaltung der Verbindungsschicht wirkt sich auch positiv auf die Raumschall-Dämmung aus.

Die Dämpfungsschicht ist in der Gebrauchslage durch die Profilierung über eine große Anlagefläche mit der Verbindungsschicht verbunden. Dadurch wird die Raumschall-Dämmung stark verbessert. Durch die profilierte, nicht-ebene Ausführung der Verbindungsschicht erfolgt sowohl in der Verbindungsschicht als auch in der Dämpfungsschicht eine Dämmung über einen weiten Frequenzbereich. Gleichzeitig bewirkt die große gemeinsame Anlagefläche von Verbindungsschicht und Dämpfungsschicht, dass die Dämpfungsschicht dünn ausgeführt werden kann, was materialsparend ist und bewirkt, dass die Stärke des Paneels insgesamt gering gehalten werden kann. Die Ausbreitung des Raumschalls bzw. die Lautheit kann durch die Erfindung bis zu 40% und mehr gedämpft werden.

Nach einer erfindungsgemäßen Weiterbildung des Paneels ist es zweckmäßig, die Verbindungsschicht werkseits aufzubringen. Das volle Ausmaß an Geräuschdämmung wird durch die Einbettung der Verbindungsschicht in die Dämpfungsschicht erreicht. Dabei kann die Dämpfungsschicht entweder werkseitig aufgebracht sein. Sie kann aber vorteilhaft auch erst in der Gebrauchslage die Verbindungsschicht mindestens abschnittsweise überdecken. So ist es bspw. ohne weiteres möglich, die Dämpfungsschicht bauseits als Matte auszulegen und darauf die mit der Verbindungsschicht versehenen Paneele zu verlegen und zu einem Belag zu fügen. Die nicht-ebene Außenseite der Verbindungsschicht ragt dann in die Dämpfungsschicht hinein. Durch das Einbetten der nicht-ebenen Außenseite der Verbindungsschicht in der Dämpfungsschicht wird die volle Geräuschdämmung erreicht. Bei werkseitigem Aufbringen der Dämpfungsschicht kann diese bei Bedarf abgedeckt sein, z.B. durch ein Schutzpapier.

Die Wirksamkeit der erfindungsgemäßen Dämmung kann unter Umständen darauf zurückgeführt werden, dass beim Erzeugen von Schwingungen des Paneels, also z. B. beim Laufen auf dem Paneel, die beiden unterschiedlichen Kunststoff-Schichten sich gegeneinander verformen und dadurch besonders wirksam Schwingungen dämpfen, die dann dadurch vernichtet werden, dass sie in Wärme umgesetzt werden. Dabei ist anzunehmen, dass sich die Spitzen oder Vorsprünge, die sich an der Unterseite der Verbindungsschicht befinden, in der Dämpfungsschicht bewegen, und dass diese Bewegungsenergie mindestens zum Teil in der Dämpfungsschicht aufgefangen und abgebaut wird.

Nach einer vorteilhaften Ausführungsform der Erfindung ist das Paneel mit einer Dämpfungsschicht ausgestattet, die einen Kunststoff von bis zu 1.600 kg/m³, bevorzugt von bis zu 1.200 kg/m³, besonders bevorzugt von bis zu 600 kg/m³ aufweist. Kunststoffe in diesem Gewichtsbereich nehmen die durch Anregung des Paneels entstehenden Schwingungen besonders gut auf und dämpfen sie wirksam. Es genügt eine sehr dünne Dämpfungsschicht. Nach einer vorteilhaften Ausführung kann die Dämpfschicht 0,4 mm stark oder stärker sein. Bevorzugt weist die Dämpfungsschicht eine Stärke von 0,2-3,0 mm auf. Die Dämpfungsschicht weist bevorzugt mindestens eine solche Stärke auf, dass die Spitzen oder Vorsprünge der Verbindungsschicht aufgenommen werden.

Zu den Kunststoffen, die für eine Dämpfung des Raumschalls besonders geeignet sind, zählen vor allem plastisch verformbare, also "weiche" Kunststoffe, die gut zu verarbeiten sind und die dauerhaft wirksame Raumschall-Dämmung gewährleisten. Werkstoffe mit geringer Rückstellkraft, die sich gut plastisch verformen lassen, sind als Dämpfungsschicht geeignet. Typische Beispiele für solche Kunststoffe sind unter anderem Polyolefine, weiches Ethylen-Vinylacetat, aber auch Polyethylen, insbesondere PolyethylenSchaumfolie, allgemein Thermoplaste, auch Bitumen, Butylkautschuk, Dichtungswerkstoffe oder Dichtungskitt und andere plastisch verformbare Massen haben sich in Versuchen als geeignet erwiesen.

Der Zusatz von Dämpfungskörpern zu dem Kunststoff der Dämpfungsschicht hat sich als wirkungsvolle Option erwiesen, um den Raumschall weitgehend zu dämpfen. Die Verwendung von Dämpfungskörpern insbesondere, wenn sie als Hohlkörper aus Kunststoff, beispielsweise als Kunststoff-Kugeln (sphärische Hohlkörper) ausgebildet sind, ermöglicht eine Verringerung des Raumschalls gegenüber ungedämpften Pancelen auf bis zu 40% und mehr. Typisches Beispiel für solche Kunststoff-Hohlkörper sind Expancel®-Microspheres.

Während die der Unterseite des Paneels zugewandte Seite der Dämpfungsschicht, die an der Verbindungsschicht anliegt, erfindungsgemäß die nicht-ebene Gestaltung spiegelbildlich aufnimmt, kann nach einer bevorzugten Ausführung der Erfindung die dem Untergrund zugewandte Seite der Dämpfungsschicht eben ausgebildet sein. Dadurch ist einerseits eine ebene Auflagefläche gewährleistet. Andererseits können kleine Unebenheiten des Untergrunds durch den Kunststoff der Dämpfungsschicht ausgeglichen werden, insbesondere dann, wenn ein weicher und leichter Kunststoff verwendet wird, so wie vorstehend beschrieben.

Vorteilhaft ist die Dämpfungsschicht auf einer Folie aufgebracht, die in der Gebrauchslage von der Verbindungsschicht abgewandt ist. Bevorzugt ist diese Folie als Dampfbremse oder Dampfsperre ausgebildet.

Die Dämpfungsschicht ist so ausgeführt, dass sie die Verbindungsschicht vollständig bedeckt. Bereits bei einer geringen Abdeckung sind positive Dämmeffekte meßbar. Erfinderisch deckt die Dämpfungsschicht jedoch die gesamte Verbindungsschicht ab, um eine möglichst weitgehende Dämmung zu bewirken.

Die Verbindungsschicht kann in einer ersten Ausführung aus dem Material des Paneels hergestellt sein, einfach indem die Unterseite des Paneels entsprechend profiliert, beispielsweise geprägt oder gefräst wird, so dass die gewünschte nicht-ebene Struktur entsteht. Diese Variante der Erfindung setzt voraus, dass die Dichte des Paneels geeignet ist für die Herstellung einer Verbindungsschicht. Typischerweise ist dies z. B. bei HDF-Paneelen gegeben. Vielfach lässt sich jedoch diese einfache Ausführung nicht realisieren, insbesondere dann nicht, wenn die Unterseite des Paneels mit einem Gegenzug versehen ist oder wenn dass Paneel aus einem zu leichten Werkstoff besteht.

Die zweite Ausführung der Erfindung sieht vor, die Verbindungsschicht aus Kunststoff herzustellen, der mit der Unterseite des Paneels verbunden wird. Wird als Gegenzug 2. B. das häufig eingesetzte mit Melaminharz getränkte Papier verwendet, könnte beim Verpressen ein entsprechendes Strukturblech eingesetzt werden, welches dem Gegenzug durch Formen des duroplastischen Melaminharzes die gewünschte Oberfläche ergibt.

Erfinderisch weist die Verbindungsshicht eine Dichte von mehr als 600 kg/m³ auf, Bevorzugt beträgt die Dichte mehr als 900 kg/m³, besonders bevorzugt beträgt die Dichte mehr als 1.500 kg/m³. Es hat sich als wirkungsvoll für die Verbindungsschicht herausgestellt, wenn nicht leichte Kunststoffe eingesetzt werden sondern vielmehr möglichst schwerer Kunststoff. Entsprechend ist es auch vorteilhaft, Füllkörper für die Verbindungsschicht einzusetzen, die möglichst schwer sind, beispielsweise Schwertspat- oder Kreidepartikel. Bevorzugt wird hartes EVA, das ggf. mit Füllkörpern versehen ist, zur Herstellung der Verbindungs-Dämmung eingesetzt. Harte Schmelzkleber wurden in Erprobungsversuchen ebenfalls eingesetzt.

Die nicht-ebene Oberfläche der Verbindungsschicht, die dem Paneel abgewandt ist, hat sich als wesentlich für eine wirkungsvolle Schalldämpfung erwiesen. Die Profiltiefe sollte mindestens 0,2 mm, besser bis zu 0,4 mm, bevorzugt bis zu 0,8 mm, vorteilhaft bis zu 1,2 mm, besonders vorteilhaft bis 1,5 mm, vorzugsweise bis 4,0 mm betragen. In den meisten Fällen entspricht die Profiltiefe der Stärke der Verbindungsschicht. Es kann aber auch eine Ausführung gewählt werden, bei der die Stärke der Verbindungsschicht größer ist als die Profiltiefe, wenn also durch die Profilierung Vorsprünge, Zapfen oder dergleichen erzeugt werden, deren Höhe geringer ist als die gesamte Verbindungsschicht. Bevorzugt wird, dass die Profiltiefe -und damit auch die Verbindungsschichtbei geringer Stärke gehalten werden kann, so dass nur ein geringer Kunststoffeinsatz erforderlich ist.

Die nicht-ebene Oberfläche kann nahezu beliebig gestaltet sein. Sie kann nach einer bevorzugten Ausführung pyramiden- und/oder rautenförmig gestaltet sein, die Vorsprünge, die sich bei einer nicht-ebenen Oberfläche ergeben, können zylinderförmig, kugelig und/oder vieleckig sein. Bevorzugt sind lang gestreckte Vorsprünge, da sie eine besonders große Oberflächenvergrößerung bewirken und da solche Vorsprünge besonders deutlich von der Ausrichtung des Paneels abweichen. Besonders bevorzugt ist eine mit zapfenartigen Vorsprüngen ausgebildete Verbindungsschicht.

Erste Versuche haben gezeigt, dass bei einer Verbindungsschicht mit pyramidenförmigen Vorsprüngen ein Abstand der Vorsprünge von 0,2 mm bis 0,8 mm, bevorzugt von 0,3,-0,5 mm zu guten Trittschall- und Raumschalldämmwerten geführt hat.

Die Trittschall-Dämmung deckt nach einer bevorzugten Ausführung der Erfindung die Unterseite des Paneels vollständig ab. Durch die vollständige Beschichtung der Unterseite wird das Entstehen von Hohlräumen vermieden, die möglicherweise als Resonanzräume wirken und der erfindungsgemäßen Beschichtung entgegenwirken könnten.

Es wurde bereits vorstehend erläutert, dass die Paneele aus verschiedenen Werkstoffen hergestellt sein können. Häufig sind es Paneele aus Holz oder Holzwerkstoffen. Typisch sind ein- oder dreischichtige Parkett-Paneele aus HDF, MDF oder Spanplatte, bei denen zudem das Problem der Schalldämmung besonders deutlich mess- und spürbar ist. Es können aber auch Paneele aus anderen Werkstoffen, beispielsweise aus mit Kunstharz gebundenen Mineralplatten, extrudierte Paneelen, allgemein Kunststoffpaneelen oder dergleichen mit der erfindungsgemäßen Schalldämmung versehen sein.

An dieser Stelle sei angemerkt, dass die erfindungsgemäße Beschichtung des Paneels sowohl an Holzwerkstoff-Platten angebracht werden kann, die noch nicht in einzelne Paneele aufgeteilt sind. Es ist aber auch möglich, die fertig aufgeteilten Paneele einzeln auf der Unterseite mit der erfindungsgemäßen Beschichtung zu versehen. Es ist natürlich auch ohne weiteres möglich, die Verbindungsschicht auf die noch nicht aufgeteilten Holzwerkstoff-Platten aufzubringen und die Dämmschicht auf die bereits aufgeteilten Paneele.

Die der Erfindung zugrunde liegende Aufgabe wird weiter durch einen Belag, insbesondere einem Fußbodenbelag, nach Anspruch 18 gelöst, der mehrere schwimmend auf einer festen Unterlage miteinander verbundene Paneelen mit einer schallmindernden Schicht auf der Unterseite der Paneele aufweist, wobei die schallmindernde Schicht wenigstens eine Verbindungsschicht mit einer nicht-ebenen Oberfläche aufweist, die vollständig mit einer Dämpfungsschicht aus Kunststoff beschichtet ist. Die vorstehend beschriebenen Paneele können in verschiedenen Dimensionen gefertigt werden. Zum Teil können groß dimensionierte Paneele von mehreren Quadratmetern Fläche auf kleinen Flächen einzeln eingesetzt werden und wirken -wie oben beschrieben- dämmend. Üblicherweise sind jedoch größere Flächen zu belegen und zur einfacheren Verarbeitung bietet es sich an, eine Vielzahl einzelner Paneele zu einem Belag zu verbinden, der schwimmend auf dem Untergrund verlegt ist. Das Verbinden der Paneele kann auf beliebige Weise erfolgen, es kann z. B. durch Verleimen oder durch mechanisches Verriegeln geschehen.

Nach einer vorteilhaften Weiterbildung handelt es sich um einen Belag, dessen Paneele aus Holz, Holzwerkstoff und/oder Kunststoff gefertigt sind. Jedes Material, das für die Herstellung von Paneelen geeignet ist, wie z. B. oben beschrieben, eignet sich auch zur Herstellung des erfindungsgemäßen Belags. Bevorzugt werden Spanplatten, mitteldichte oder hochdichte Faserplatten, OSB-Platten oder Sperrholz eingesetzt.

Bevorzugt handelt es sich bei dem erfindungsgemäßen Belag um einen Belag, dessen Paneele auf der Oberseite mit einem Dekor und einer abriebfesten Beschichtung versehen sind. Es kann sich dabei z. B. um ein Dekorpapier mit darauf angeordnetem Overlay oder um ein Dekor-Lackierung mit einem Topcoat aus abriebfestem Lack handeln. Es kann sich aber auch um Paneele mit einem Dekorfurnier handeln, dass mit einer Lackschicht geschützt ist.

Nach einer vorteilhaften Ausführung handelt es sich um einen Belag, dessen Paneele mit einer integral am Kern des Paneels angeformten Verbindungsschicht oder mit einer auf der Unterseite des Paneels fixierten Verbindungsschicht versehen sind.

Bevorzugt ist der erfindungsgemäße Belag so ausgestallet, dass die mindestens eine Verbindungsschicht und die Dämpfungsschicht als eigenständige schallmindernde Beschichtung hergestellt ist, die werkseits oder bauseits auf die Unterseite der Paneele aufgebracht ist. Durch die Ausführung der schallmindernden Beschichtung als eigenständiges Bauteil ist die erfindungsgemäße Schalldämmung sehr flexibel zu handhaben. Die Erfindung betrifft weiter eine schallmindernde Beschichtung nach Anspruch 34 mit einer Verbindungsschicht aus einem harten Kunststoff, die einseitig mit Vorsprüngen versehen ist, wobei die Vorsprünge in eine Dämpfungsschicht aus weichem Kunststoff eingebettet sind. Werkstoffe, Verwendung und Funktionsweise dieser schallmindernden Beschichtung wurden bereits vorstehend beschrieben und sind in den Ausführungsbeispielen näher erläutert. Es ist als besonderer Vorteil bei der Verarbeitung der schallmindernden Beschichtung anzusehen, dass auch ein werkseitiges Anbringen an den Paneelen möglich ist, die zur Herstellung eines Belags eingesetzt werden. Dadurch können beliebige Paneele mit hoch wirksamem Schallschutz verlegt werden. Die erfindungsgemäße schallmindernde Beschichtung wird Bevorzugt unter Belägen, insbesondere Fußbodenbelägen, eingesetzt.

Gegenstand der Erfindung ist weiter ein Verfahren zum Herstellen von Paneelen nach Anspruch 24, die eine Schalldämmung aufweisen. Das erfindungsgemäße Verfahren weist folgende Schritte auf: Formen der nicht- ebenen Außenseite einer Verbindungsschicht, Aufbringen einer Dämpfungsschicht aus weichem Kunststoff auf die Verbindungsschicht.

Im einfachsten Fall wird die Unterseite des Paneels geformt, insbesondere dann, wenn sich der Werkstoff des Paneels hierfür eignet und / oder kein Gegenzug auf der Unterseite des Paneels aufzubringen ist. Das Paneel kann in diesem Fall z. B. mit einem entsprechend gestalteten Pressblech auf der Unterseite mit Vorsprüngen versehen werden. Häufig wird es jedoch erforderlich sein, eine Verbindungsschicht aus Kunststoff aufzubringen. Diese kann ebenfalls in der Presse auf die Unterseite des Paneels aufgebracht werden oder sie kann nachträglich aufgespritzt, aufgeschäumt, aufgewalzt oder in beliebiger anderer Weise aufgebracht werden.

Das Aufbringen einer Trittschall-Dämmung aus Kunststoff ist aus dem Stand der Technik an sich bekannt. Auch das Formen einer nicht-ebenen Außenweite der Trittschall-Dämmung ist aus der DE 202 00 235 bekannt. Die Schalldämmung, die wie vorstehend erläutert, sowohl den Trittschall als auch den Raumschall zu berücksichtigten hat, wird erfindungsgemäß signifikant verbessert, wenn nicht allein eine Trittschall-Dämmung aufgebracht wird. Vielmehr wird auf die erfindungsgemäß gestaltete Verbindungsschicht werkseitig oder bauseitig eine die Verbindungsschicht vollständig abdeckende weitere Schicht aus Kunststoff zur Raumschall-Dämmung aufgebracht. Das Einbetten der profilierten, nicht-ebenen Außenseite der Verbindungsschicht bewirkt eine deutlich verbesserte Raumschall-Dämmung, ohne dass die Wirkung der Trittschall-Dämmung beeinträchtigt wird.

Das Aufbringen der Dämmschichten kann auf vielfältige Weise, jeweils in Abstimmung auf die eingesetzten Kunststoffe und die zum Aufbringen verwendeten Vorrichtungen erfolgen, z. B. durch Walzen, Rakeln, Gießen, Schäumen, Streichen und /oder Sprühen.

Die Kunststoffe der Verbindungs- und der Dämpfungsschicht werden bevorzugt in flüssigem Zustand auf das Paneel bzw. auf die Verbindungsschicht aufgebracht. Durch die Verarbeitung der Kunststoffe in flüssigem Zustand ist der Auftrag besonders gleichmäßig und präzise und dadurch sparsam.

Für die meisten Kunststoffe bedeutet eine Verarbeitung in flüssigem Zustand eine Verarbeitung bei höheren Temperaturen. Die Verbindungs- und/oder die Dämpfungsschicht wird daher nach einer vorteilhaften Ausführung des erfindungsgemäßen Verfahrens bei erhöhten Temperaturen aufgetragen, bevorzugt bei Temperaturen von bis zu 190 °C. besonders bevorzugt von bis zu 150 °C, vorteilhaft von bis zu 100 °C.

Um ggf. erforderliche, weitere Bearbeitungsschritte vornehmen zu können oder um die mit der erfindungsgemäßen Schalldämmung versehenen Paneele ohne weiteres Lagern zu können, kann es sich als zweckmäßig erweisen, die Paneele nach dem Auftragen der Verbindung- und/oder der Raumschall-Dämmung gemäß einer bevorzugten Ausführung des erfindungsgemäßen Verfahrens zu kühlen. Das Kühlen kann z. B. durch Aufblasen von Kaltluft erfolgen.

Die Herstellung der nicht-ebenen Außenseite der Verbindungsschicht erfolgt nach einer vorteilhaften Ausführung, indem ein profiliertes Formwerkzeug auf die Außenseite der Verbindungsschicht einwirkt. Als Formwerkzeug können z. B. profilierte Walzen oder profilierte Pressbleche eingesetzt werden. Profilierte Pressbleche werden bevorzugt eingesetzt, wenn die Verbindungs-Dämmung vor dem Beschichten der Paneele in einer Presse aufgetragen wird. Dies geschieht typischerweise durch das Aufpressen eines Aminoplast getränkten Papiers mit einem Strukturblech, das die gewünschte Struktur in den Gegenzug, der die Unterseite des Paneels bildet, einpresst. Der ausgehärtete duroplastische Kunststoff zeigt dann die nicht-ebenen, verhältnismäßig starren Strukturen, die für die erfindungsgemäße Verbindungsschicht kennzeichnend sind.

Erfindungsgemäß wird die Dämpfungsschicht auf der vorn Paneel abgewandten Seite, der Außenseite, nicht profiliert. Um ein sehr gleichmäßiges Aufliegen des Paneels mit der Schalldämmung auf dem Untergrund zu gewährleisten, kann nach einer vorteilhaften Ausführung der Erfindung vorgesehen sein, dass die Außenseite der Dämpfungsschicht geglättet wird, beispielsweise mit einem Rakel abgezogen wird oder glatt aufgewalzt wird.

Schließlich ist Gegenstand der Erfindung eine Vorrichtung zum Herstellen eines Paneels mit Schalldämmung nach Anspruch 33. aufweisend Mittel zum Aufbringen einer Verbindungsschicht aus Kunststoff und mittel zum Formen einer nicht-ebenen Außenseite dieser Verbindungsschicht, dadurch gekennzeichnet, dass Mittel zum Aufbringen einer Dämpfungsschicht aus Kunststoff auf die Verbindungsschicht vorgesehen sind.

Eine gattungsgemäße Vorrichtung zum Aufbringen einer nicht-ebenen Verbindungsschicht und zum Formen der Außenseite dieser Dämmschicht sind u. a. aus der DE 202 00 235 U1 bekannt. Die bekannte Vorrichtung wird ergänzt um Mittel zum Aufbringen einer Dämpfungsschicht aus Kunststoff. Diese Mittel können als Walzen, Rakel, Gieß-, Streich- und/oder Sprühvorrichtung ausgebildet sein. Diese Mittel sind- wie vorstehend erläutert- bevorzugt um Mittel zum Erwärmen des Kunststoffes ergänzt, die über Mittel zum Fördern flüssigen Kunststoffes mit den Mitteln zum Auftragen verbunden sind. Sowohl die Mittel zum Auftragen der Verbindungsschicht als auch die Mittel zum Auftragen der Dämpfungsschicht können als Mittel zum Auftragen von flüssigem Kunststoff ausgelegt sein.

Um die weitere Be- oder Verarbeitung der mit der erfindungsgemäßen Schalldämmung versehenen Paneele weiter zu beschleunigen, können vorteilhaft Mittel zum Kühlen der Dämpfungsschicht und/oder der Verbindungsschicht vorgesehen sein. Die Mittel zum Kühlen, beispielsweise Kühlluft-Gebläse, ermöglichen es z.B., die Raumschall-Dämmung möglichst schnell nach dem Auftragen und Formen der Verbindungs-Dämmung aufzubringen. Dadurch wird die Produktion wesentlich gestrafft.

Die Mittel zum Formen der nicht-ebenen Außenseite der Verbindungsschicht sind bevorzugt als profilierte Werkzeuge, beispielsweise als profilierte Walzen oder als profilierte Pressbleche ausgestaltet. Diese Werkzeuge wirken auf die Außenseite der Verbindungsschicht aus Kunststoff ein und bewirken eine plastische Verformung. Auf diese Weise entsteht eine Außenseite, die abwechselnd Vorsprünge und Vertiefungen aufweist. Die Vorsprünge weisen Oberflächenabschnitte auf, die nicht-parallel zu den Oberflächen des Paneel stehen. Insbesondere Oberflächenabschnitte der Vorsprünge, die annähernd senkrecht zur Oberseite oder Unterseite des Paneels stehen, tragen zu einer verbesserten Schalldämmung bei.

Nach einer bevorzugten Ausführung der erfindungsgemäßen Vorrichtung sind Mittel zum Glätten der Außenseite der Dämpfungsschicht vorgesehen, die eine möglichst vollständige Anlage des Paneels am Untergrund gewährleisten sollen.

Details der Erfindung werden am Beispiel einer Ausführung der Erfindung näher erläutert. Es zeigt:
- Fig. 1: einen Querschnitt durch eine schematische Darstellung eines mit einer erfindungsgemäßen Schalldämmung versehenen Paneels;
- Fig. 2: einen Querschnitt durch eine schematische Darstellung eines mit einer Verbindungsschicht versehenen, schallbelasteten Paneels;
- Fig. 3: einen Querschnitt durch eine schematische Darstellung eines mit einer Verbindungsschicht und einer Dämpfungsschicht versehenen, schallbelasteten Paneels;
- Fig. 4: einen Querschnitt durch eine schematische Darstellung einer zweiten Ausführungsform eines Paneels;
- Fig. 5: einen Querschnitt durch eine schematische Darstellung einer dritten Ausführungsform eines Paneels.

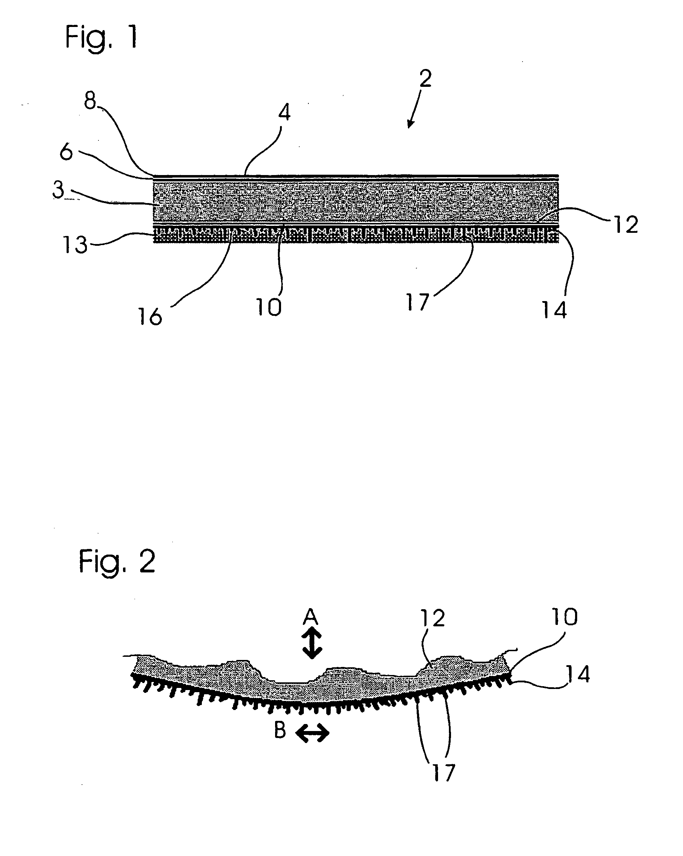

Fig. 1 zeigt ein Paneel 2 mit einem Kern 3 aus HDF, dessen Oberseite 4 mit einem harzgetränkten Dekorpapier 6 und einem Overlay 8 versiegelt ist. Dadurch entsteht ein belastbares, verschleißfestes Paneel 2, das z. B. als Fußbodenbelag einsetzbar ist. Mit der Unterseite 10 des Paneels 2 ist ein Gegenzug 12 aus Papier verpresst, der die Dimensionsstabilität des Paneels 2 gewährleistet. Der Gegenzug 12 wirkt dcn Zugkräften entgegen, die beim Aufbringen von Dekorpapier und Overlay 8 auf das Paneel 2 wirken.

Auf die Unterseite 10 des Paneels 2, genauer gesagt auf den Gegenzug 12, ist mittels einer profilierten Walze eine Verbindungsschicht 14 aus hartem EVA aufgetragen. Die Verbindungsschicht 14 ist nicht eben. Sie weist Vorsprünge 17 auf, die in einem Abstand von o,6 mm bis 1,2 mm nebeneinander angeordnet sind. Die maximale Stärke der Verbindungsschicht 14 beträgt 3 mm, die Profiltiefe, also der Abstand zwischen dem stärksten Auftrag und dem dünnsten Auftrag der Verbindungsschicht, beträgt 1,2 mm.

Die Außenseite 13 der Verbindungsschicht 14 ist von einer Dämpfungsschicht 16 aus Polyolefinen überzogen. Die Dämpfungsschicht 16 ist mittels einer Walze mit einer verchromten Oberfläche aufgetragen, die eine Glättung der Außenseite der Dämpfungsschicht 16 bewirkt.

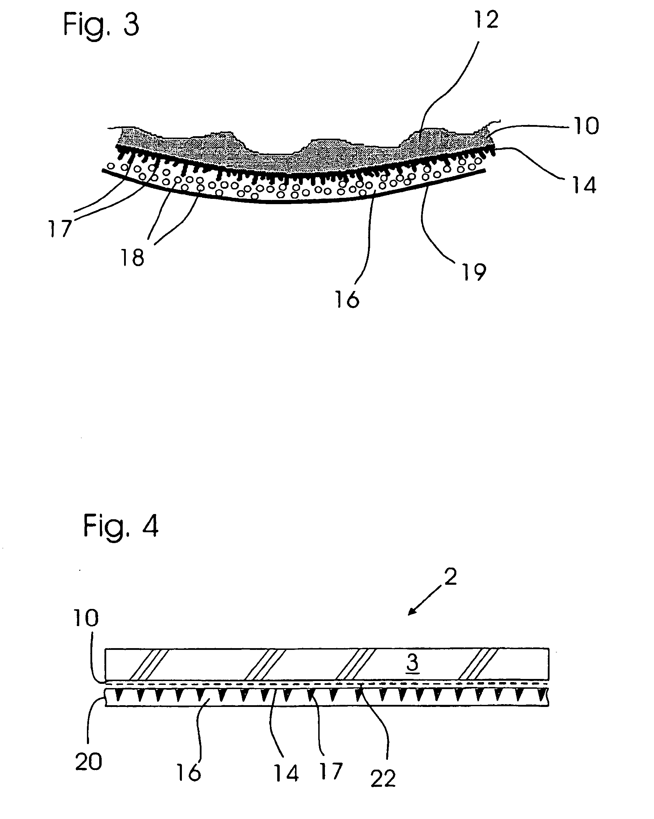

In der Gebrauchslage liegt das Paneel 2 auf einem Fußboden auf. Beim Begehen des Paneels wird das Paneel 2 mechanisch belastet und in Schwingung versetzt. Fig. 2 und 3 stellen diesen Zustand dar. Die Schwingung strahlt zum einen in den Raum zurück, dcr mit dem Paneel 2 ausgelegt ist. Die Schwingung strahlt zum anderen auf den Fußboden ab, auf dem das Paneel 2 aufliegt und überträgt sich von dort auf angrenzende Räume.

Fig. 2 zeigt einen schematischen Ausschnitt aus dem Paneel 2, nämlich dessen auf der Unterseite 10 aufgetragene Verbindungsschicht 14 aus hartem EVA. Die aufgrund der Materialeigenschaften des harten EVA starren Vorsprünge 17 der Verbindungsschicht 14 geraten zusammen mit dem Paneel 2 beim Begehen in Schwingung. Die Krafteinwirkung wird durch den Pfeil A angedeutet. Sie schwingen allerdings -bezogen auf die Ebene des Paneels 2- in etwa senkrecht dazu, vergleiche Pfeil B.

Fig. 3 zeigt die in die Dämpfungsschicht 16 eingebetteten Vorsprünge 17 der Verbindungsschicht 14. Die Vorsprünge 17 sind aus hartem EVA und schwingen oder versuchen in der Dämpfungsschicht 16 zu schwingen. Durch diese Bewegung wird die Schwingung des Paneels 2 wirksam und effektiv abgebaut. Die Bewegung der Vorsprünge 17 wird in der Dämpfungsschicht 16 aus weichem EVA zunächst in Reibung und dann in Wärme umgesetzt. Das Schwingen der Vorsprünge 17 wird zusätzlich wirksam gedämpft durch die in der Dämpfungsschicht 16 enthaltenen Dämpfungskörper 18. Die Dämpfungskörper 18 sind kugelige Hohlkörper, die ebenfalls aus elastischem Kunststoff hergestellt sind. Diese Umwandlung der durch das Begehen in das Paneel 2 eingebrachten Schwingungsenergie in Reibung bzw. Wärmeenergie bewirkt eine wirksame Verbesserung sowohl der Trittschall- als auch der Raumschall-Dämmung. Durch die ebene Außenseite 19 der Dämpfungsschicht ist eine gute Auflage des Paneels 2 auf dem Untergrund gewährleistet.

Fig. 4 zeigt eine zweite Ausführungsform des erfindungsgemäßen Paneels 2. Das Paneel 2 weist einen Kern 3 aus Spanplatte auf. Die Spanplatte ist nicht weiter beschichtet, sie soll als Ausgleichsplatte und Untergrund für einen Fußbodenbelag dienen. Zur verbesserten Schalldämmung sowohl hinsichtlich des Trittschalls als auch hinsichtlich des Raumschalls wird eine Dämmmatte 20 auf die Unterseite 10 des aufgeklebt. Die Klebstoffschicht 22 ist in Fig. 4 angedeutet.

Die Dämmmatte 20 ist eine schallmindernde Beschichtung. Sie kann werkseits oder bauseits aufgeklebt werden. Sie besteht aus der Verbindungsschicht 14 aus hartem, plastisch wenig verformbaren Kunststoff (hartem EVA) mit den Vorsprüngen 17, die in die Dämmschicht 16 hineinragen. Die Dämmschicht besteht aus weichem, plastisch gut verformbaren Kunststoff (weichem EVA). Die Verbindungsschicht 14 ist mit der Dämmschicht 16 verklebt.

Die Dämmmatte 20 wird so auf die Unterseite 10 des Paneels 2 aufgeklebt, dass die Verbindungsschicht an der Unterseite 10 des Paneels anliegt. Die Klebstoffschicht 22 kann bereits auf die Verbindungsschicht 14 aufgetragen sein, so dass beim Fügen von schallmindernder Beschichtung 20 und dem Paneel 2 die beiden Bauteile aneinander haften. Diese Ausführung des erfindungsgemäßen Paneels 2 mit der separat ausgeführten Dämmmatte 20 zeigt die besonders flexible und einfache Handhabung der Dämmung.

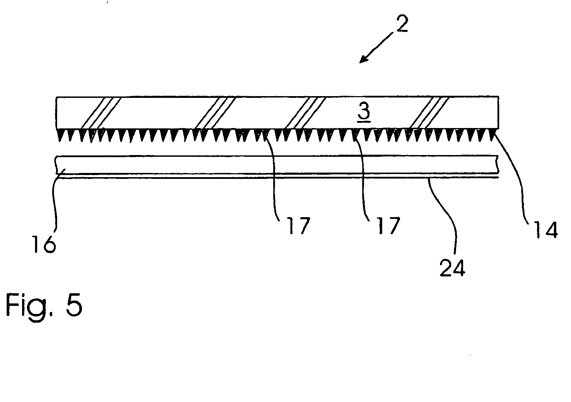

Fig. 5 zeigt ein Paneel 2, dessen Kern 3 aus HDF besteht, und das im übrigen die gleichen Oberflächenbeschichtungen und einen gleichartigen Gegenzug aufweist wie das in Fig. 1 dargestellte Paneel. Werkseitig wird die Verbindungsschicht 14 mit den Vorsprüngen 17 aufgetragen. Die Dämpfungsschicht 16, eine 0,8 mm starke, weiche EVA-Schicht, ist auf eine Folie 24 aus Polyethylen aufgebracht. In der Gebrauchslage wird auf die ausgebreitete Dämpfungsschicht 16 das Paneel 2 so aufgelegt, dass die Vorsprünge 17 in der Dämpfungsschicht 16 einsinken und diese dabei plastisch verformen.

## Patentansprüche

1. Paneel mit
- einer in der Gebrauchslage dem Raum zugewandten Oberseite (4) und
- einer dem Boden zugewandten Unterseite (10), wobei
- die Unterseite (10) mindestens abschnittsweise eine Verbindungsschicht (14) mit einer Dichte von mehr als 600 kg/m³ aufweist, und
- die Verbindungsschicht (14) auf der dem Paneel (2) abgewandten Außenseite (13) eine nicht-ebene Oberfläche aufweist, Dadurch, dass die nicht-ebene Oberfläche der Verbindungsschicht (14) zur Erzeugung von Vorsprüngen (17) profiliert ist,
**dadurch gekennzeichnet, dass** die Verbindungsschicht (14) mit
- einer Dämpfungsschicht (16) aus weichem Kunststoff beschichtet ist, wobei die Dämpfungsschicht (16) die Verbindungsschicht (14) vollständig abdeckt, und
- wobei die Vorsprünge in die Dämpfungsschicht (16) aus weichem Kunststoff eingebettet sind.

2. Paneel nach Anspruch 1, **dadurch gekennzeichnet, dass** die Dämpfungsschicht (16) einen Kunststoff mit einer Dichte von bis zu 1.600 kg/m³, bevorzugt von bis zu 1.200 kg/m³, vorteilhaft von bis zu 600 kg/m³ aufweist.

3. Paneel nach Anspruch 1, **dadurch gekennzeichnet, dass** der Kunststoff der Dämpfungsschicht (16) einen plastisch verformbaren Kunststoff aufweist, insbesondere einen Kunststoff oder eine Kunststoffmischung aus einer Gruppe, die Polyolefine, Polyethylen, weiches Ethylen-Vinylacetat, Butylkautschuk, Dichtungskitt, Bitumen und/ oder Polyethylenschaumfolie umfasst.

4. Paneel nach Anspruch 1, **dadurch gekennzeichnet, dass** der Kunststoff der Dämpfungsschicht (16) Dämpfungskörper (18) enthält.

5. Paneel nach Anspruch 4, **dadurch gekennzeichnet, dass** die Dämpfungskörper (18) als Hohlkörper, bevorzugt als sphärische Hohlkörper, ausgebildet sind.

6. Paneel nach Anspruch 1, **dadurch gekennzeichnet, dass** die dem Paneel (2) abgewandte Außenseite (19) der Dämpfungsschicht (16) eben ist oder eine raue Oberfläche aufweist.

7. Paneel nach Anspruch 1, **dadurch gekennzeichnet, dass** die Dämpfungsschicht auf einer Folie aufgebracht ist, die in der Gebrauchslage von der Verbindungsschicht abgewandt ist.

8. Paneel nach Anspruch 1, **dadurch gekennzeichnet, dass** die Verbindungsschicht (14) aus einem anderen Material als das Paneel (2) besteht, insbesondere aus Kunststoff besteht.

9. Paneel nach Anspruch 1, **dadurch gekennzeichnet, dass** die Verbindungsschicht (14) eine Dichte von mehr als 900 kg/m³, vorteilhaft von mehr als 1.500 kg/m³ aufweist.

10. Paneel nach Anspruch 1, **dadurch gekennzeichnet, dass** die Verbindungsschicht (14) einen harten Kunststoff aufweist, insbesondere Duroplasten wie Melaminharz oder hartes Ethylen-Vinyl-Acetat aufweist.

11. Paneel nach Anspruch 1, **dadurch gekennzeichnet, dass** die Außenseite (13) mit der nicht-ebenen Oberfläche der Verbindungsschicht (14) eine Profiltiefe von bis zu 4,0 mm, vorzugsweise von bis zu 1,5 mm, bevorzugt von bis zu 1,2 mm, besonders bevorzugt von bis zu 0,8 mm, besonders bevorzugt von bis zu 0,4 mm, vorteilhaft bis zu 0,2 mm aufweist.

12. Paneel nach Anspruch 1, **dadurch gekennzeichnet, dass** die Außenseite (13) der Verbindungsschicht (14) eine geometrisch regelmäßige oder eine unregelmäßige Oberfläche aufweist.

13. Paneel nach Anspruch 12, **dadurch gekennzeichnet, dass** die Außenseite (13) der Verbindungsschicht (14) eine zapfen-, rauten- oder pyramidenförmige Oberfläche aufweist.

14. Paneel nach Anspruch 1, 12 oder 13, **dadurch gekennzeichnet, dass** der Abstand von Vorsprüngen (17) auf der nicht-ebenen Außenseite der Verbindungsschicht (14) ca. 0,2 mm bis ca. 0,8 mm beträgt.

15. Paneel nach Anspruch 1, **dadurch gekennzeichnet, dass** die Verbindungsschicht (14) die Unterseite des Paneels (2) vollständig bedeckt.

16. Paneel nach Anspruch 1, **dadurch gekennzeichnet, dass** das Paneel (2) aus Holz oder aus einem Holzwerkstoff, bevorzugt aus hochdichter oder mitteldichter Faserplatte, aus Spanplatte oder aus einer mit Kunstharz gebundenen Mineralplatte besteht.

17. Paneel nach Anspruch 1, **dadurch gekennzeichnet, dass** die Verbindungsschicht (14) werkseits aufgebracht ist.

18. Belag aus mehreren schwimmend miteinander verbundenen Paneelen (2), die auf einer festen Unterlage angeordnet sind, mit einer schallmindernden Schicht auf der Unterseite (13) der Paneele (2), wobei die schallmindernde Schicht wenigstens eine Verbindungsschicht (14) mit einer Dichte von mindestens 600 kg/m³ und mit einer nicht-ebenen Oberfläche aufweist, dadurch, dass die nicht-ebene Oberfläche der Verbindungsschicht (14) zur Erzeugung von Vorsprüngen (17) profiliert ist, **dadurch gekennzeichnet, dass**
- die Verbindungsschicht (14) mit einer Dämpfungsschicht (16) aus weichem Kunststoff beschichtet ist,
- die Vorsprünge (17) in die Dämpfungsschicht (16) aus weichem Kunststoff eingebettet sind, und
- wobei die Dämpfungsschicht (16) die Verbindungsschicht (14) vollständig abdeckt.

19. Belag nach Anspruch 18, **dadurch gekennzeichnet, dass** dessen Paneele (2) des Belags aus Holz, Holzwerkstoff und/oder Kunststoff gefertigt sind.

20. Belag nach Anspruch 18, **dadurch gekennzeichnet, dass** dessen Paneele (2) auf der Oberseite (4) mit einem Dekor und einer abriebfesten Belichtung (8) verschen sind.

21. Belag nach Anspruch 18, **dadurch gekennzeichnet, dass** dessen Paneele (2) mit einer integral am Kern (3) des Paneels (2) angeformten Verbindungsschicht (14) oder mit einer auf der Unterseite (13) des Paneels (2) fixierten Verbindungsschicht (14) versehen sind.

22. Belag nach Anspruch 18, **dadurch gekennzeichnet, dass** die mindestens eine Verbindungsschicht (14) und die Dämpfungsschicht (16) als schallmindernde Schicht hergestellt sind und werkseits oder bauseits auf die Unterseite (13) der Paneele (2) aufgebracht sind.

23. Belag nach Anspruch 18, Dadurch gekennzeichner, dass die schallmindernde Schicht wenigstens eine werkseits aufgebrachte Verbindungsschicht (14) aufweist.

24. Verfahren zum Herstellen von Paneelen (2), die schalldämmung aufweisen, mit den Schritten
- Formen der Außenseite (13) einer Verbindungsschicht (14) mit einer Dichte von mehr als 600 kg/m³ zu einer nicht-ebenen Oberfläche, die aus Vorsprüngen (17) gebildet wird,
- Aufbringen einer Dämpfungsschicht (16) aus weichem Kunststoff auf die Verbindungsschicht (14), wobei die Dämpfungsschicht (16) die Verbindungsschicht (14) vollständig abdeckt und die Vorsprünge (17) in die Dämpfungsschicht eingebettet sind.

25. Verfahren nach Anspruch 24, **dadurch gekennzeichnet, dass** die Verbindungsschicht (14) aus Kunststoff ist, der vor dem Formen der Außenseite (13) auf die Unterseite des Paneels (2) aufgebracht wird.

26. Verfahren nach Anspruch 24, **dadurch gekennzeichnet, dass** die Verbindungsschicht (14) und die Dämpfungsschicht (16) mittels Walzen, Rakeln, Gießen, Streichen und/oder Sprühen aufgebracht werden.

27. Verfahren nach Anspruch 24, **dadurch gekennzeichnet, dass** die Kunststoffe der Verbindungsschicht (14) und/oder der Dämpfungsschicht (16) in flüssigem Zustand aufgebracht werden.

28. Verfahren nach Anspruch 24 oder 27, **dadurch gekennzeichnet, dass** die Verbindungsschicht (14) und/oder die Dämpfungsschicht (16) bei erhöhten Temperaturen, bevorzugt bei Temperaturen von bis zu 190 °C, bevorzugt von bis zu 150 °C, besonders bevorzugt von bis zu 100 °C aufgebracht werden.

29. Verfahren nach mindestens einem der vorangehenden Ansprüche 24 bis 28, **dadurch gekennzeichnet, dass** die Verbindungsschicht (14) und/oder die Dämpfungsschicht (16) nach dem Aufbringen abgekühlt werden.

30. Verfahren nach Anspruch 24, **dadurch gekennzeichnet, dass** die Außenseite (13) der Verbindungsschicht (14) mit einem profilierten Formwerkzeug zu einer nicht-ebenen Oberfläche geformt wird, bevorzugt mit einer profilierten Walze oder mittels eines profilierten Pressblechs.

31. Verfahren nach Anspruch 24, **dadurch gekennzeichnet, dass** die Dämpfungsschicht (16) nach dem Aufbringen geglättet wird.

32. Verfahren nach Anspruch 24 zum Herstellen von Paneelen (2), die Schalldämmung aufweisen, mit den Schritten
- werkseitiges Formen der Außenseite (13) der Verbindungsschicht (14)
- in der Gebrauchslage Aufbringen der Dämpfungsschicht (16).

33. Vorrichtung zum Herstellen eines Paneels mit einer Schalldämmung, aufweisend
- Mittel zum Formen einer nicht-ebenen Außenseite (13) einer Verbindungsschicht (14) mit einer Dichte von mehr als 600 kg/m³, wobei die Mittel zum Formen derart auf die Außenseite einwirken, dass die Außenseite Vorsprünge aufweist, und
- Mittel zum Aufbringen einer Dämpfungsschicht (16) aus weichem Kunststoff auf die Verbindungsschicht (14) vorgesehen sind, wobei die aufgebrachte Dämpfungsschicht (16) die Verbindungsschicht (14) vollständig abdeckt und die Vorsprünge in die Dämpfungsschicht (16) aus weichem Kunststoff eingebettet sind.

34. Schallmindernde Beschichtung mit einer Verbindungsschicht (14), die einen harten Kunststoff aufweist, mit einer Dichte von mehr als 600 kg/m³, die einseitig zur Erzeugung von Vorsprüngen (17) profiliert ist, wobei die Vorsprünge (17) in eine Dämpfungsschicht (16) aus weichem Kunststoff eingebettet sind, und die Dämpfungsscbicht (16) die Verbindungsschicht (14) vollständig abdeckt.

## Claims

1. A panel with
- an upper side (4) facing the room in the position of utilization, and
- a lower side (10) facing the floor, wherein
- the lower side (10) at least in sections has a connection layer (14) with a density of more than 600 kg/m³, and
- the connection layer (14) on the outer side (13) facing away from the panel (2) has a non-planar surface such that the non-planar surface of the connection layer (14) is profiled for creating projections (17),
**characterized in that** the connection layer (14)
- is coated with a damping layer (16) composed of soft plastic, wherein the damping layer (16) completely covers the connection layer (14), and
- wherein the projections are embedded in the damping layer (16) composed of soft plastic.

2. The panel according to claim 1, **characterized in that** the damping layer (16) is composed of a plastic with a density up to 1,600 kg/m³, preferably up to 1,200 kg/m³, advantageously up to 600 kg/m³.

3. The panel according to claim 1, **characterized in that** the plastic of the damping layer (16) has a plastically deformable plastic, particularly a plastic or a plastic compound from the group comprising polyolefins, polyethylene, soft ethylene vinyl acetate, butyl rubber, putty, bitumen, and/or polyethylene foam film.

4. The panel according to claim 1, **characterized in that** the plastic of the damping layer (16) contains damping bodies (18).

5. The panel according to claim 4, **characterized in that** the damping bodies (18) are formed as hollow bodies, preferably as spherical hollow bodies.

6. The panel according to claim 1, **characterized in that** the outer side (19) of the damping layer (16) facing away from the panel (2) is planar, or has a rough surface.

7. The panel according to claim 1, **characterized in that** the damping layer is applied onto a film, which in the position of utilization is facing away from the connection layer.

8. The panel according to claim 1, **characterized in that** the connection layer (14) is composed of a different material than the panel (2), particularly composed of plastic.

9. The panel according to claim 1, **characterized in that** the connection layer (14) has a density of more than 900 kg/m³, advantageously more than 1,500 kg/m³.

10. The panel according to claim 1, **characterized in that** the connection layer (14) has a hard plastic, in particular duroplastics such as melamine resin or hard ethylene vinyl acetate.

11. The panel according to claim 1, **characterized in that** the outer side (13) with the non-planar surface of the connection layer (14) has a profiled depth of up to 4.0 mm, advantageously up to 1.5 mm, preferably up to 1.2 mm, particularly preferably up to 0.8 mm, particularly preferably up to 0.4 mm, advantageously up to 0.2 mm.

12. The panel according to claim 1, **characterized in that** the outer side (13) of the connection layer (14) has a geometrically regular or irregular surface.

13. The panel according to claim 12, **characterized in that** the outer side (13) of the connection layer (14) has a conical, diamond-shaped, or pyramid-shaped surface.

14. The panel according to claim 1, 12, or 13, **characterized in that** the distance from projections (17) on the non-planar outer side of the connection layer (14) amounts to approximately 0.2 mm up to approximately 0.8 mm.

15. The panel according to claim 1, **characterized in that** the connection layer (14) completely covers the lower side of the panel (2).

16. The panel according to claim 1, **characterized in that** the panel (2) is composed of wood, or of a composite wood, preferably of high density or medium density fiber board composed of flake board or of a mineral plate bound with the synthetic resin.

17. The panel according to claim 1, **characterized in that** the connection layer (14) is applied at the factory.

18. A covering composed of a plurality of floating panels (2) connected together which are disposed on a solid base, with a noise reducing layer on the lower side (13) of the panels (2), wherein the noise reducing layer has at least one connection layer (14) with a density of at least 600 kg/m³ and with a non-planar surface, in that the non-planar surface of the connection layer (14) is profiled for creating projections (17), **characterized in that**
- the connection layer (14) is coated with a damping layer (16) composed of soft plastic,
- the projections (17) are embedded in the damping layer (16) composed of soft plastic, and
- wherein the damping layer (16) completely covers the connection layer (14).

19. The covering according to claim 18, **characterized in that** its panels (2) are manufactured from wood, composite wood and/or plastic.

20. The covering according to claim 18, **characterized in that** the panels (2) thereof are provided on the upper side (4) with a pattern and an abrasion-resistant coating (8).

21. The covering according to claim 18, **characterized in that** panels (2) thereof are provided with a connection layer (14) integrally formed at the core (3) of the panel (2), or with a connection layer (14) fixed onto the lower side (13) of the panel (2).

22. The covering according to claim 18, **characterized in that** the at least one connection layer (14) and the damping layer (16) are produced as a noise reducing layer and are applied at the factory or on-site onto the lower side (13) of the panels (2).

23. The covering according to claim 18, **characterized in that** the noise reducing layer has at least one connection layer (14) applied at the factory.

24. A method for producing panels (2), with sound absorption, having the steps
- forming the outer side (13) of a connection layer (14) with a density of more than 600 kg/m³ into a non-planar surface, which is formed from projections (17),
- applying a damping layer (16) made of soft plastic, onto the connection layer (14), wherein the damping layer (16) completely covers the connection layer (14), and the projections (17) are embedded into the damping layer (16).

25. The method according to claim 24, **characterized in that** the connection layer (14) is made of plastic which is applied onto the lower side of the panel (2) before forming the outer side (13).

26. The method according to claim 24, **characterized in that** the connection layer (14) and the damping layer (16) are applied by means of rolling, blade coating, molding, painting and/or spraying.

27. The method according to claim 24, **characterized in that** the plastics of the connection layer (14) and/or the damping layer (16) are applied in the liquid state.

28. The method according to claim 24 or 27, **characterized in that** the connection layer (14) and/or the damping layer (16) are applied at increased temperatures, preferably at temperatures of up to 190 °C, preferably up to 150 °C, particularly preferably up to 100°C.

29. The method according to at least one of the preceding claims 24 to 28, **characterized in that** the connection layer (14) and/or the damping layer (16) are cooled after the application.

30. The method according to claim 24, **characterized in that** the outer side (13) of the connection layer (14) is formed with a profiled forming tool into a non-planar surface, preferably with a profiled roller or by means of a profiled pressure plate.

31. The method according to claim 24, **characterized in that** the damping layer (16) is smoothed after the application.

32. The method according to claim 24, for producing panels (2) having sound absorption, with the steps
- forming the outer side (13) of the connection layer (14) at the factory,
- applying the damping layer (16) in the position of utilization.

33. A device for producing a panel with a sound absorption, having
- means for forming a non-planar outer side (13) of a connection layer (14) with a density of more than 600 kg/m³, wherein the means for forming act upon the outer side such that the outer side has projections, and
- means are provided for applying a damping layer (16), made of soft plastic, onto the connection layer (14), wherein the applied damping layer (16) completely covers the connection layer (14) and the projections are embedded into the damping layer (16) composed of soft plastic.

34. A sound reducing coating with a connection layer (14), which has a hard plastic, with a density of more than 600 kg/m³, which is profiled on one side for creating projections (17), wherein the projections (17) are embedded into a damping layer (16) made of soft plastic, and the damping layer (16) completely covers the connection layer (14).

## Revendications

1. Panneau, avec
- un côté supérieur (4) tourné vers le local dans la position d'utilisation et
- un côté inférieur (10) tourné vers le sol,
- le côté inférieur (10) présentant au moins par tronçons une couche de liaison (14) d'une densité supérieure à 600 kg/m³, et
- la couche de liaison (14) présentant sur le côté extérieur (13) qui est éloigné du panneau (2) une surface non plane du fait que la surface non plane de la couche de liaison (14) est profilée pour la production de saillies (17),
**caractérisé en ce que** la couche de liaison (14)
- est revêtue d'une couche d'amortissement (16) en matière plastique souple, la couche d'amortissement (16) recouvrant complètement la couche de liaison (14), et
- les saillies étant noyées dans la couche d'amortissement (16) en matière plastique souple.

2. Panneau selon la revendication 1, **caractérisé en ce que** la couche d'amortissement (16) présente une matière plastique d'une densité allant jusque 1 600 kg/m³, de préférence allant jusqu'à 1 200 kg/m³, de façon avantageuse allant jusqu'à 600 kg/m³.

3. Panneau selon la revendication 1, **caractérisé en ce que** la matière plastique de la couche d'amortissement (16) présente une matière plastique plastiquement déformable, en particulier une matière plastique ou un mélange de matière plastique parmi un groupe qui comprend des polyoléfines, du polyéthylène, de l'éthylène-acétate de vinyle souple, du caoutchouc butyle, du mastic de scellement, du bitume et/ou une feuille de mousse de polyéthylène.

4. Panneau selon la revendication 1, **caractérisé en ce que** la matière plastique de la couche d'amortissement (16) contient des corps d'amortissement (18).

5. Panneau selon la revendication 4, **caractérisé en ce que** les corps d'amortissement (18) sont constitués en tant que corps creux, de préférence en tant que corps creux sphériques.

6. Panneau selon la revendication 1, **caractérisé en ce que** le côté extérieur (19) de la couche d'amortissement (16) qui est éloigné du panneau (2) est plan ou présente une surface rugueuse.

7. Panneau selon la revendication 1, **caractérisé en ce que** la couche d'amortissement est appliquée sur une feuille qui, dans la position d'utilisation, est éloignée de la couche de liaison.

8. Panneau selon la revendication 1, **caractérisé en ce que** la couche de liaison (14) est constituée d'un autre matériau que le panneau (2), en particulier de matière plastique.

9. Panneau selon la revendication 1, **caractérisé en ce que** la couche de liaison (14) présente une densité supérieure à 900 kg/m³, de façon avantageuse supérieure à 1 500 kg/m³.

10. Panneau selon la revendication 1, **caractérisé en ce que** la couche de liaison (14) présente une matière plastique dure, en particulier des matières thermodurcissables, comme la résine de mélamine ou de l'éthylène-acétate de vinyle dur.

11. Panneau selon la revendication 1, **caractérisé en ce que** le côté extérieur (13) avec la surface non plane de la couche de liaison (14) présente une profondeur de profil allant jusqu'à 4,0 mm, de préférence jusqu'à 1,5 mm, préférentiellement jusqu'à 1,2 mm, particulièrement préférentiellement allant jusqu'à 0,8 mm, particulièrement préférentiellement allant jusqu'à 0,4 mm, avantageusement allant jusqu'à 0,2 mm.

12. Panneau selon la revendication 1, **caractérisé en ce que** le côté extérieur (13) de la couche de liaison (14) présente une surface géométriquement régulière ou une surface irrégulière.

13. Panneau selon la revendication 12, **caractérisé en ce que** le côté extérieur (13) de la couche de liaison (14) présente une surface en forme de cône, de losange ou de pyramide.

14. Panneau selon la revendication 1, 12 ou 13, **caractérisé en ce que** l'intervalle des saillies (17) sur le côté extérieur non plan de la couche de liaison (14) est d'environ 0,2 mm à environ 0,8 mm.

15. Panneau selon la revendication 1, **caractérisé en ce que** la couche de liaison (14) recouvre complètement le côté inférieur du panneau (2).

16. Panneau selon la revendication 1, **caractérisé en ce que** le panneau (2) est constitué de bois ou d'un matériau dérivé du bois, de préférence de panneau de fibres de densité élevée ou moyenne, de panneau de particules ou d'un panneau minéral lié à de la résine synthétique.

17. Panneau selon la revendication 1, **caractérisé en ce que** la couche de liaison (14) est appliquée en usine.

18. Revêtement composé de plusieurs panneaux (2) qui sont liés les uns aux autres de façon flottante et sont disposés sur un substrat fixe, avec une couche réduisant le bruit sur le côté inférieur (13) des panneaux (2), la couche réduisant le bruit présentant au moins une couche de liaison (14) d'une densité d'au moins 600 kg/m³ et ayant une surface non plane, du fait que la surface non plane de la couche de liaison (14) est profilée pour la production de saillies (17), **caractérisé en ce que**
- la couche de liaison (14) est revêtue d'une couche d'amortissement (16) en matière plastique souple,
- les saillies (17) sont noyées dans la couche d'amortissement (16) en matière plastique souple, et
- la couche d'amortissement (16) recouvrant complètement la couche de liaison (14).

19. Revêtement selon la revendication 18, **caractérisé en ce que** les panneaux (2) du revêtement sont réalisés en bois, en matériau dérivé du bois et/ou en matière plastique.

20. Revêtement selon la revendication 18, **caractérisé en ce que** ses panneaux (2) sont, sur le côté supérieur (4), munis d'une décoration et d'une couche de revêtement (8) résistant à l'abrasion.

21. Revêtement selon la revendication 18, **caractérisé en ce que** ses panneaux (2) sont munis d'une couche de liaison (14) formée d'un seul tenant sur le coeur (3) du panneau (2) ou d'une couche de liaison (14) fixée sur le côté inférieur (13) du panneau (2).

22. Revêtement selon la revendication 18, **caractérisé en ce que** la couche de liaison (14), au moins au nombre de un, et la couche d'amortissement (16) sont fabriquées en tant que couche réduisant le bruit et sont appliquées en usine ou sur site sur le côté inférieur (13) des panneaux (2).

23. Revêtement selon la revendication 18, **caractérisé en ce que** la couche réduisant le bruit présente au moins une couche de liaison (14) appliquée en usine.

24. Procédé de fabrication de panneaux (2) qui présentent une isolation sonore, comprenant les étapes suivantes :
- formage du côté extérieur (13) d'une couche de liaison (14) avec une densité supérieure à 600 kg/m³ en une surface non plane qui est formée de saillies (17),
- application d'une couche d'amortissement (16) en matière plastique souple sur la couche de liaison (14), la couche d'amortissement (16) recouvrant complètement la couche de liaison (14), et les saillies (17) étant noyées dans la couche d'amortissement.

25. Revêtement selon la revendication 24, **caractérisé en ce que** la couche de liaison (14) est en matière plastique qui est appliquée, avant le formage du côté extérieur (13), sur le côté inférieur du panneau (2).

26. Procédé selon la revendication 24, **caractérisé en ce que** la couche de liaison (14) et la couche d'amortissement (16) sont appliquées par laminage, raclage, coulée, enduction et/ou pulvérisation.

27. Procédé selon la revendication 24, **caractérisé en ce que** les matières plastiques de la couche de liaison (14) et/ou de la couche d'amortissement (16) sont appliquées à l'état liquide.

28. Procédé selon la revendication 24 ou 27, **caractérisé en ce que** la couche de liaison (14) et la couche d'amortissement (16) sont appliquées à des températures élevées, de préférence à des températures allant jusqu'à 190 °C, de préférence jusqu'à 150 °C, de façon particulièrement préférée jusqu'à 100°C.

29. Procédé selon au moins une des revendications précédentes 24 à 28, **caractérisé en ce que** la couche de liaison (14) et/ou la couche d'amortissement (16) sont refroidies après l'application.

30. Procédé selon la revendication 24, **caractérisé en ce que** le côté extérieur (13) de la couche de liaison (14) est formé en une surface non plane avec un outil de formage profilé, de préférence avec un cylindre profilé ou au moyen d'une plaque de pressage profilée.

31. Procédé selon la revendication 24, **caractérisé en ce que** la couche d'amortissement (16) est lissée après l'application.

32. Procédé selon la revendication 24 pour la fabrication de panneaux (2) qui présentent une isolation sonore, comprenant les étapes suivantes :
- formage en usine du côté extérieur (13) de la couche de liaison (14)
- application de la couche d'amortissement (16) dans la position d'utilisation.

33. Dispositif pour la fabrication d'un panneau ayant une isolation sonore, présentant
- des moyens de formage d'un côté extérieur (13) non plan d'une couche de liaison (14) ayant une densité supérieure à 600 kg/m³, les moyens de formage agissant sur le côté extérieur de sorte que le côté extérieur présente des saillies, et
- des moyens d'application d'une couche d'amortissement (16) en matière plastique souple sur la couche de liaison (14) sont prévus, la couche d'amortissement (16) appliquée recouvrant complètement la couche de liaison (14), et les saillies étant noyées dans la couche d'amortissement (16) en matière plastique souple.

34. Couche de revêtement réduisant le bruit, avec une couche de liaison (14) qui présente une matière plastique dure, ayant une densité supérieure à 600 kg/m ³ qui est profilée unilatéralement pour la production de saillies (17), les saillies (17) étant noyées dans une couche d'amortissement (16) en matière plastique souple, et la couche d'amortissement (16) recouvrant complètement la couche de liaison (14).
